# EUROPÄISCHE PATENTANMELDUNG

(11) **EP 0 879 581 A2**
(43) Veröffentlichungstag der Anmeldung: **25.11.1998**
(21) Anmeldenummer: 98109179.6
(22) Anmeldetag: 20.05.1998
(51) Int. Cl.: A61C 17/06

(54) **Vorrichtung zum Absaugen von Flüssigkeiten**

(30) Priorität: 23.05.1997 CH 1206/97
(71) Anmelder: Maeder, Alain Jean-Jacques, 1233 Bernex (CH)
(72) Erfinder: Maeder, Alain Jean-Jacques, 1233 Bernex (CH)
(74) Vertreter: Troesch Scheidegger Werner AG

(57) **Zusammenfassung**

Die Erfindung betrifft eine Vorrichtung zum Absaugen von in der Mundhöhle angesammelter Flüssigkeiten, insbesondere von Speichel, wobei ein Absaugelement (AE) und ein Stützelement (SE) vorgesehen sind. Das Absaugelement (AE) weist in seinem unteren, seitlichen und oberen Bereich mindestens ein Loch (L) auf, durch das bzw. durch die aufgrund eines mit einer Pumpe erzeugten Unterdruckes in einem Hohlraum des Absaugelementes (AE) Flüssigkeiten gesammelt werden. Zur exakten Positionierung des Absaugelementes (AE) in der Mundhöhle ist dieses mit dem Stützelement (SE) verbindbar. Durch die Verwendung der erfindungsgemässen Vorrichtung wird die Zunge vom Arbeitsbereich ferngehalten, und folglich werden keine Hilfspersonen mehr benötigt.

## Beschreibung

Die vorliegende Erfindung betrifft eine Vorrichtung nach dem Oberbegriff des Patentanspruchs 1.

Absaugvorrichtungen werden insbesondere von Zahnärzten zum Absaugen von Flüssigkeiten, insbesondere von Speichel, der sich in der Mundhöhle dauernd bildet, verwendet, damit einerseits entsprechende Arbeitsbereiche frei zugänglich bleiben, anderseits der Patient nicht zum Schlucken veranlasst wird, was oftmals einen Unterbruch in der Behandlung zur Folge hat.

Bekannte Absaugvorrichtungen bestehen aus einfachen, allenfalls flexiblen, zum Teil spiralförmigen Rohren, die von einer Hilfsperson jeweils an die Stellen in der Mundhöhle gebracht werden, die speichelfrei gehalten werden müssen.

Nachteilig bei diesen bekannten Absaugvorrichtungen ist, dass eine Hilfsperson die Absaugvorrichtung immer führen muss, wenn eine umständliche gleichzeitige Handhabung von Absaugvorrichtung und anderen Geräten durch die behandelnde Person vermieden werden soll.

Der vorliegenden Erfindung liegt daher die Aufgabe zugrunde, eine Vorrichtung anzugeben, die obenerwähnte Nachteile nicht aufweist.

Diese Aufgabe wird durch die im kennzeichnenden Teil des Patentanspruchs 1 angegebenen Massnahmen gelöst. Vorteilhafte Ausgestaltungen der Erfindung sind in weiteren Ansprüchen angegeben.

Die Erfindung weist folgende Vorteile auf: Indem die Absaugvorrichtung, insbesondere das Absaugelement, mittels eines Stützelementes fixiert wird, ist ein Führen des Absaugelementes durch eine Hilfsperson nicht notwendig. Die weitaus bevorzugte Verwendung eines U-förmigen Absaugelementes ermöglicht darüber hinaus, die Zunge des Patienten zu fixieren bzw. vom Arbeitsbereich fernzuhalten. Dies ermöglicht in noch weit ausgeprägterem Masse, die Behandlung - bei bequem gehalterter Zunge - ohne Hilfsperson vorzunehmen.

Die Erfindung wird nachfolgend anhand von Zeichnungen beispielsweise näher erläutert. Dabei zeigen
- Fig. 1: Bestandteile einer erfindungsgemässen Vorrichtung in perspektivischer Darstellung,
- Fig. 2: die vollständig zusammengesetzte erfindungsgemässe Vorrichtung gemäss Fig. 1,
- Fig. 3: ein erfindungsgemässes Stützelement,
- Fig. 4: die bei einem Patienten eingesetzte erfindungsgemässe Vorrichtung in Querschnittdarstellung und
- Fig. 5: die bei einem Patienten eingesetzte erfindungsgemässe Vorrichtung in perspektivischer Darstellung.

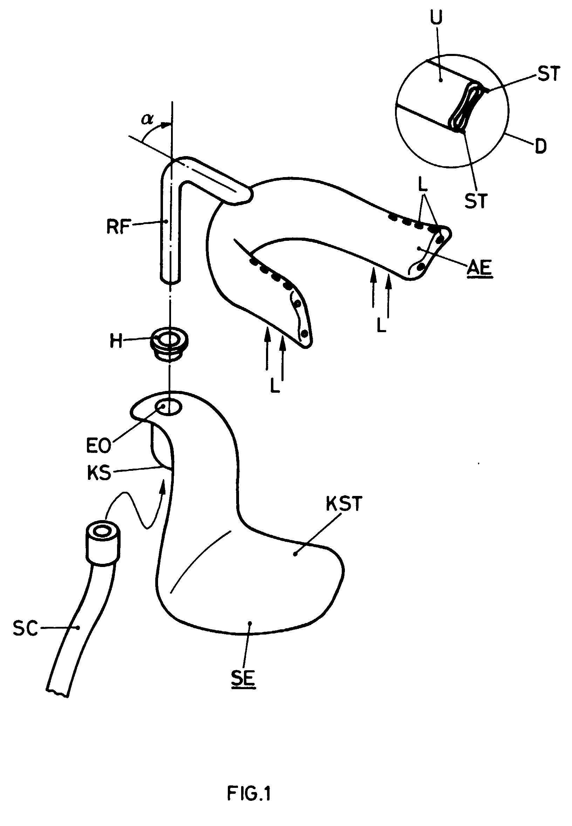

Fig. 1 zeigt in perspektivischer Darstellung eine erfindungsgemässe Vorrichtung zum Absaugen von Flüssigkeiten, insbesondere Speichel, aus der Mundhöhle, wobei die Vorrichtung aus einem mit einem Hohlraum versehenen Absaugelement AE, einem mit diesem fest verbundenen Rohrfortsatz RF, einer Hülse H und einem Stützelement SE besteht, das eine Kinnstütze KST, eine Einsatzöffnung EO und eine Koppelstelle KS aufweist.

Das Absaugelement AE ist vorzugsweise U-förmig ausgebildet und weist an seiner Unterseite sowie seitlich und auf seiner Oberseite Locher L auf, durch die Speichel oder andere aus der Mundhöhle zu entfernenden Flüssigkeiten abgesaugt werden, indem ein Unterdruck im Hohlraum des Absaugelementes AE erzeugt wird. Der Hohlraum ist anderseits mit dem Rohrfortsatz RF verbunden, der mit dem Absaugelement AE vorzugsweise fest verbunden ist und der L-förmig ausgebildet ist, wobei die beiden Flanken des Rohrfortsatzes RF vorzugsweise einen Winkel von 80 Grad einschliessen.

In Fig. 1 ist aus einer Detaildarstellung D der innere Aufbau des Absaugelementes AE ersichtlich, wobei in dieser Detaildarstellung D ein Querschnitt durch einen Zweig des U-förmigen Absaugelementes AE dargestellt ist. Erkennbar ist ein durch Stützeinheiten ST und einen Überzug U gebildeter Hohlraum, der durch die Löcher L nach aussen, d. h. mit der Mundhöhle, verbunden ist und in dem die abzusaugenden Flüssigkeiten gesammelt und zum Rohrfortsatz RF transportiert werden. Die vorzugsweise aus einem plastisch verformbaren Material, vorzugsweise aus Kupferdraht gebildeten Stützeinheiten ST vermitteln dem Überzug U eine feste Form, die allerdings aufgrund der Flexibilität des verwendeten Materials für die Stützeinheiten ST beliebig verändert und angepasst werden kann. Damit lässt sich das Absaugelement AE in einfacher Weise an die entsprechende individuellen Form einer Mundhöhle anpassen.

Das vom Absaugelement AE trennbare Stützelement SE weist eine äussere Form auf, die einem Negativabzug eines "normal ausgebildeten" menschlichen Kinns entspricht. Damit lässt sich das Stützelement SE formschlüssig an ein Kinn anschmiegen. Das Stützelement SE weist ferner eine Einpassöffnung EO und eine Koppelstelle KS auf, die miteinander verbunden sind und vorzugsweise auf einer Achse ausgerichtet sind. Während über die Koppelstelle KS ein Schlauch SC anschliessbar ist, der auf der anderen Seite mit einer Pumpe - in Fig. 1 nicht dargestellt - verbunden ist, ist in die Einpassöffnung EO der Rohrfortsatz RF aufnehmbar, wobei dieser mit Hilfe der Hülse H in der Einpassöffnung EO festgehalten wird. Dazu weist die Hülse H einen inneren Durchmesser, der dem äusseren Durchmesser des Rohrfortsatzes RF entspricht, und einen äusseren Durchmesser auf, der dem inneren Durchmesser der Einpassöffnung EO entspricht. Damit beim Einschieben des mit der Hülse H versehenen Rohrfortsatzes RF in die Einpassöffnung EO die Hülse H nicht in dieser verschwindet, weist die Hülse H zusätzlich einen Kragen auf, der nach dem kompletten Einschieben auf dem Stützelement SE aufsteht. Wird die Hülse H zum Kragen hin konisch breiter und wird ein elastisches Material, beispielsweise Gummi, für die Hülse H verwendet, so wird die Haftwirkung und somit die Verbindung zwischen Absaugelement AE und Stützelement SE weiter verbessert. Damit wird die Stabilität der Gesamtvorrichtung ebenfalls verbessert.

Zum Absaugen von Flüssigkeiten wird im Hohlraum des Absaugelementes AE mit Hilfe der Pumpe ein Unterdruck erzeugt, wodurch die Flüssigkeiten durch die Löcher L in den Hohlraum aufgenommen werden.

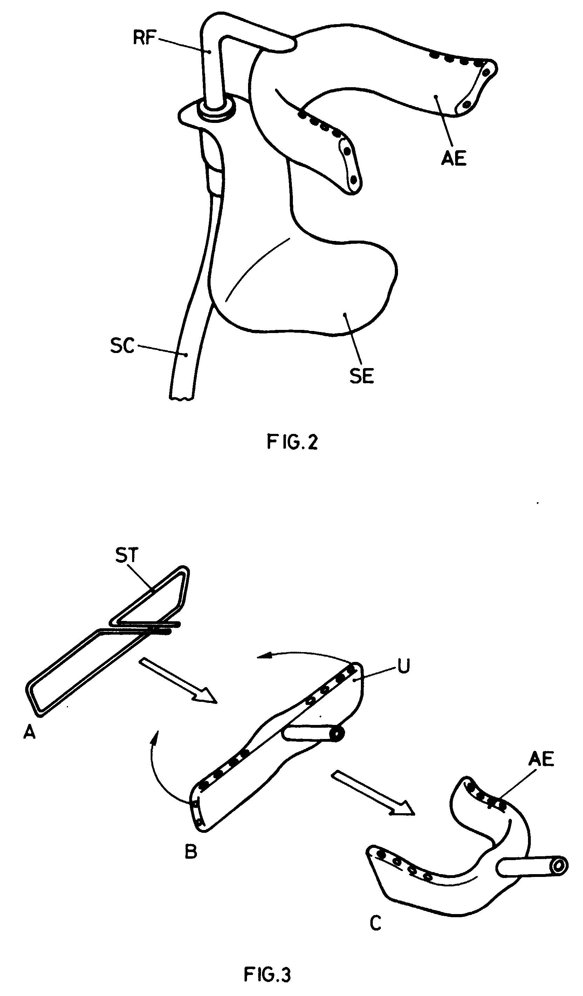

Fig. 2 zeigt die erfindungsgemässe Vorrichtung gemäss Fig. 1 in zusammengesetztem Zustand.

In Fig. 3 ist der Aufbau eines erfindungsgemässen Absaugelementes AE dargestellt, wobei Fig. 3A die Stützeinheit ST zeigt, die vorzugsweise mit Draht aus Kupfer gebildet ist. Die Stützeinheit ST wird mit einem an sich T-förmigen Überzug U gemäss Fig. 3B überzogen, der aus einem elastisch verformbaren Material gebildet ist. Damit lassen sich beliebige Formen für das Absaugelemente AE bilden, wie insbesondere auch das in Fig. 3C dargestellte U-förmige Absaugelement AE.

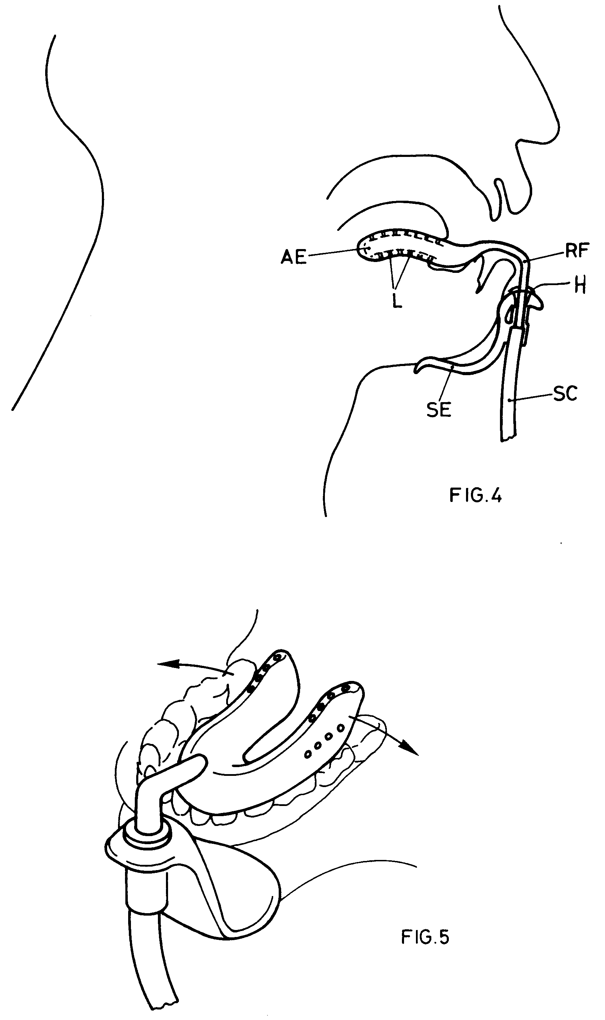

In Fig. 4 ist die erfindungsgemässe Vorrichtung im Querschnitt dargestellt, wobei sie nunmehr in die Mundhöhle eines Patienten eingesetzt ist. Dabei wird die Befestigungsart der erfindungsgemässen Vorrichtung besonders deutlich: Das Absaugelement AE wird an den Unterkiefer fest geklemmt, so dass keine Hilfsperson benötigt wird, welche das Absaugelement AE führt.

Schliesslich wird - wiederum in perspektivischer Darstellung - anhand Fig. 5 gezeigt, dass durch die erfindungsgemässe Vorrichtung, neben der primären Aufgabe des Absaugens von Flüssigkeiten, auch der Arbeitsbereich in der Mundhöhle freigehalten werden kann. So besteht die Möglichkeit, dass bei der Verwendung eines U-förmigen Absaugelementes AE die Zunge quasi eingeklemmt wird bzw. von einem bestimmten Randbereich ferngehalten wird. In Fig. 5 ist diese seitliche Fixierung durch die eingezeichneten Pfeile angedeutet.

In einer bevorzugten Ausführungsform der erfindungsgemässen Vorrichtung ist vorgesehen, dass das Absaugelement AE nach Gebrauch weggeworfen wird, währenddem das Stützelement SE jeweils wieder verwendbar ist.

In einer weiteren Ausführungsform der Erfindung weist das Absaugelement AE eine Höhe auf, die verhindert, dass die Zunge des Patienten über das Absaugelement AE hinweg über die Zähne gleiten kann und somit die Arbeit der behandelnden Person erschwert oder gar behindert. Dabei ist es nicht etwa das Ziel, die Zunge nach unten zu drücken, sondern vielmehr durch entsprechendes Stützen an einem bestimmten Ort zu halten.

## Patentansprüche

1. Vorrichtung zum Absaugen von in der Mundhöhle angesammelter Flüssigkeiten, dadurch gekennzeichnet, dass ein mindestens ein Loch (L) aufweisendes Absaugelement (AE) und ein Stützelement (SE) vorgesehen sind, wobei zur exakten Positionierung des Absaugelementes (AE) in der Mundhöhle dieses mit dem Stützelement (SE) über ein Verbindungselement (RF, H, EO, KS) verbindbar ist.

2. Vorrichtung nach Anspruch 1, dadurch gekennzeichnet, dass das Stützelement (SE) im wesentlichen ausserhalb und das Absaugelement (AE) im wesentlichen innerhalb der Mundhöhle positioniert ist, wobei das Stützelement (SE) auf der dem Absaugelement (AE) zugewandten Seite derart ausgebildet ist, dass sich das Stützelement (SE) im wesentlichen formschlüssig an das Kinn anschmiegt.

3. Vorrichtung nach Anspruch 1 oder 2, dadurch gekennzeichnet, dass das Absaugelement (AE) flexibel formbar ist und vorzugsweise U-förmig ausbildbar ist.

4. Vorrichtung nach einem der vorangehenden Ansprüche, dadurch gekennzeichnet, dass das Absaugelement (AE) aus einer Stützeinheit (ST), vorzugsweise aus Draht, und einem Überzug (U) besteht, dass der Überzug (U) die Stützeinheit (ST) vollständig umfasst und im Bereich der Auflage in der Mundhöhle mehrere Löcher (L) aufweist.

5. Vorrichtung nach einem der vorangehenden Ansprüche, dadurch gekennzeichnet, dass das Verbindungselement (RF, H, EO, KS) aus einem, vorzugsweise L-förmigen, mit dem Absaugelement (AE) verbundenen Rohrfortsatz (RF), einer Hülse (H) und einer im Stützelement (SE) enthaltenen Einpassöffnung (EO) besteht, wobei der Rohrfortsatz (RF) mittels der Hülse (H) in der Einpassöffnung (EO) arretiert wird.

6. Vorrichtung nach Anspruch 5, dadurch gekennzeichnet, dass am Stützelement (SE) eine Koppelstelle (KS) zum Anschliessen eines Absaugschlauches (SC) vorgesehen ist, wobei der Absaugschlauch (SC) mit dem Rohrfortsatz (RF) wirkverbindbar ist.

7. Vorrichtung nach einem der vorangehenden Ansprüche, dadurch gekennzeichnet, dass das Absaugelement (AE) eine Höhe aufweist, die das seitlich Abgleiten der Zunge über das Absaugelement (AE) hinweg verhindert.

8. Vorrichtung nach einem der Ansprüche 1 bis 7, dadurch gekennzeichnet, dass das Absaugelement als biegbare, in einer Ebene im wesentlichen der zum Verbindungselement ausgedehnte Rohrkammer ausgebildet ist, mit Öffnungen gerichtet im wesentlichen parallel zum Verbindungselement nach oben und/oder nach unten und/oder in der Ebene und/oder bezüglich der Rohrkammer endständig.
